# EUROPEAN PATENT APPLICATION

(11) **EP 3 160 075 A1**
(43) Date of publication of application: **26.04.2017**
(21) Application number: 15290276.3
(22) Date of filing: 22.10.2015
(51) Int. Cl.: H04L 5/00, H04W 8/24, H04W 28/18

(54) **TERMINAL AND SCHEDULER DEVICE FOR A MOBILE COMMUNICATIONS SYSTEM AND OPERATING METHOD**

(71) Applicant: ALCATEL LUCENT, 92100 Boulogne-Billancourt (FR)
(72) Inventor: Wild, Thorsten, 70435 Stuttgart (DE); Schaich, Frank, 70435 Stuttgart (DE)
(74) Representative: DREISS Patentanwälte PartG mbB

(57) **Abstract**

The invention relates to a terminal (10) for a wireless communications system (100), wherein said terminal (10) is configured to signal (300) to a base station (20) of said communications system (100) radio frequency, RF, capability information (rfci) which characterizes spectral properties of a signal (T) provided by said terminal (10) for transmissions to said base station (20).

## Description

### Field of the invention

The invention relates to a terminal for a wireless communications system, to a method of operating such terminal, to a scheduler device for a wireless communications system and to a method of operating such scheduler device.

### Background

While with fourth generation, 4G, wireless communications systems such as LTE (Long Term Evolution) a key optimization criterion has been spectral efficiency, next generation, e.g. fifth generation, 5G, systems need to look beyond this. With the advent of machine-type and machine-to-machine (M2M) communications and the Internet of Things a vast variety of devices is required to be supported by the future wireless communications systems. Very often these devices have to be low-cost and have to run on batteries for many years. So, complexity and energy consumption are to be kept in check here in addition.

Many processing steps are contributing to the overall device complexity and energy consumption. Typically, to meet spectral mask requirements, one of the very last digital baseband processing steps is filtering (attributed to RF-pre-processing).

### Summary

It is an object of the present invention to provide an improved terminal and method of operating a terminal, an improved scheduler device and an improved method of operating a scheduler device which provide efficient integration of low-end devices into wireless communications systems.

According to an aspect of the invention, regarding a terminal, this object is achieved by said terminal being configured to signal to a base station of said communications system radio frequency, RF, capability information which characterizes spectral properties of a signal provided by said terminal for transmissions to said base station, whereby the base station or devices operating with said base station are enabled to take into account the terminal's RF capabilities which increases operational flexibility and improves integration of new device types.

According to an embodiment, said spectral properties comprise information on a) a required size of at least one guard band adjacent to a spectrum associated with said transmissions of said terminal, and/or on b) a slope of a spectrum associated with said transmissions of said terminal, and/or on c) an amount of out of band radiation of a spectrum associated with said transmissions of said terminal, and/or on d) the capability to meet a particular spectral mask requirement. This information enables a network side device receiving said information such as e.g. a base station or a scheduler device of said wireless communications system to perform an improved scheduling taking into account the guard band requirements of a specific terminal and the like.

According to a further embodiment, said RF capability information characterizes a specific one of several predetermined device classes, wherein said device classes are preferably represented by a digital number, which enables a particularly efficient signaling.

For example, according to an embodiment, two device classes may be introduced which define different sets of spectral properties each. According to an embodiment, a first device class may be associated with a first guard band requirement which e.g. indicates that devices of said first device class require a comparatively large guard band adjacent to their transmitted signal spectrum (either on one frequency side or on both frequency sides of their spectrum, wherein symmetric or asymmetric guard bands may also be possible). According to an embodiment, a second device class may be associated with a second guard band requirement which e.g. indicates that devices of said second device class require a comparatively small guard band adjacent to their transmitted signal spectrum (either on one frequency side or on both frequency sides of their spectrum, wherein symmetric or asymmetric guard bands may also be possible). In this example, low-cost terminals with less sophisticated hardware such as e.g. RF amplifiers and the like may be assigned the first device class, whereas terminals with more complex signal processing may e.g. be assigned the second device class. According to further embodiments, more than two device classes are also possible.

According to a further embodiment, said terminal is configured to provide a digital baseband signal depending on information to be transmitted to said base station, and to perform a step of radio frequency, RF, processing directly on said digital baseband signal, wherein preferably, said terminal is configured to provide multi-carrier modulated signals of the universal filtered multi-carrier, UFMC, type and/or of the FBMC (filter-bank based multi-carrier) type. These waveforms advantageously already have inherent filtering in their design for improved spectral localization properties over e.g. CP-OFDM (cyclic prefix orthogonal frequency division multiplexing). Filter-bank based multi-carrier (FBMC) uses per-subcarrier filters. Universal Filtered Multi-Carrier (UFMC / UF-OFDM) uses per-subband filters. As a consequence, a terminal using these (FBMC or UF-OFDM) techniques may not require any additional filtering step after providing said digital baseband signal. Rather, in these embodiments, said digital baseband signal may directly be subjected to RF processing such as upconversion into an RF range (such as typically e.g. between 0.4 GHz (400 MHz) and 8.0 GHz) and/or power amplification.

For details regarding the aforementioned waveforms and modulation techniques, it is referred to the publication: F. Schaich, T. Wild, Y. Chen , "Waveform contenders for 5G - suitability for short packet and low latency transmissions", IEEE VTCs'14, Seoul, Korea, May 2014.

A further solution to the object of the present invention is provided by a method of operating a terminal for a wireless communications system, wherein said terminal signals to a base station of said communications system radio frequency, RF, capability information which characterizes spectral properties of a signal provided by said terminal for transmissions to said base station.

According to an embodiment, said spectral properties comprise information on a) a required size of at least one guard band adjacent to a spectrum associated with said transmissions of said terminal, and/or on b) a slope of a spectrum associated with said transmissions of said terminal, and/or on c) an amount of out of band radiation of a spectrum associated with said transmissions of said terminal, and/or on d) the capability to meet a particular spectral mask requirement. According to an embodiment, when using said capability to meet a particular spectral mask requirement, two or more different spectral masks may be defined, which may e.g. differ from each other.

According to a further embodiment, said terminal provides a digital baseband signal depending on information to be transmitted to said base station, and performs a step of radio frequency, RF, processing directly on said digital baseband signal; wherein preferably, said terminal is configured to provide multi-carrier modulated signals of the universal filtered multi-carrier, UFMC, type.

According to a further embodiment, said digital baseband signal is directly subjected to said step of RF processing, particularly without applying a step of filtering said digital baseband signal, which is particularly beneficial if FBMC or UF-OFDM type digital baseband signals are provided by the terminal as these modulation schemes already comprise an inherent filtering so that an extra step of filtering prior to RF processing (upconversion to RF range and/or power amplification) may be avoided.

A further solution to the object of the present invention is provided by a scheduler device for a wireless communications system, wherein said scheduler device is configured to receive from at least one terminal, particularly a terminal according to the embodiments, of said wireless communications system radio frequency, RF, capability information which characterizes spectral properties of a signal provided by said at least one terminal for transmissions to a base station of said communications system. This enables the scheduler device to collect information on the RF capabilities of several terminals and may contribute to improved radio resource planning and scheduling.

According to an embodiment, said spectral properties comprise information on a) a required size of at least one guard band adjacent to a spectrum associated with said transmissions of said terminal, and/or on b) a slope of a spectrum associated with said transmissions of said terminal, and/or on c) an amount of out of band radiation of a spectrum associated with said transmissions of said terminal.

According to a further embodiment, said scheduler device is configured to schedule resources, particularly frequency resources, for said terminal depending on said RF capability information, thus taking into account the terminal's specific requirements regarding guard bands. This may also help to optimize an overall scheduling process taking into consideration the RF capability information of several terminals served by a base station and/or scheduled by said scheduler device.

According to some embodiments, said scheduler device may be integrated into one or more base stations of said communications system.

According to further embodiments, said scheduler device may also be provided in the form of an external device, i.e. not integrated into one or more specific base stations. The functionality of the scheduler device may e.g. be distributed within network side components of the communications system.

A further solution to the object of the present invention is provided by a method of operating a scheduler device according to claim 12.

Further features and advantages are provided by the dependent claims.

The inventive approach according to the embodiments advantageously enables to better support low-end devices which may be equipped with less precise RF processing components thus requiring comparatively large guard bands. By indicating their RF capabilities according to the embodiments, a scheduling mechanism of the network may take into account these aspects and correspondingly schedule appropriate resources, while at the same time not affecting scheduling of devices not requiring such large guard bands.

Further, scarcity of available spectrum and spectrum refarming will additionally demand the support of fragmented spectrum scenarios in 5G, where fulfillment of spectral mask requirements and sizes of guard band will play an important role. Consideration of these aspects is enabled by the principle according to the embodiments such that both support of low-end devices with highest cost and energy efficiency is enabled and at the same time the overall system may still achieve a highest spectral efficiency with small guard band overhead (which plays a pronounced role in fragmented spectrum scenarios).

### Brief description of the figures

Further features, aspects and advantages of the present invention are given in the following detailed description with reference to the drawings in which:
- Figure 1: schematically depicts a wireless communications system according to an embodiment,
- Figure 2: schematically depicts a flow-chart of a method of operating a terminal according to an embodiment,
- Figure 3: schematically depicts a flow-chart of a method of operating a terminal according to an embodiment,
- Figure 4: schematically depicts a flow-chart of a method of operating a scheduler device according to an embodiment,
- Figure 5: schematically depicts a block diagram illustrating aspects of signal processing according to an embodiment,
- Figure 6a, 6b: schematically depict frequency spectra and associated guard bands according to an embodiment,
- Figure 7: schematically depicts a time-frequency resource scheme according to an embodiment.

### Description of the embodiments

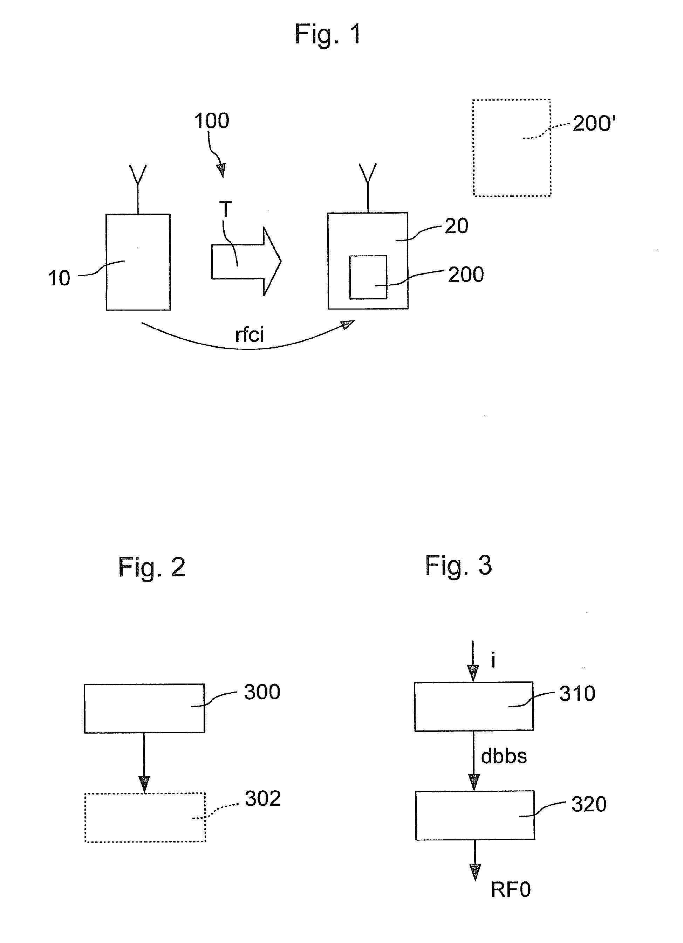

Figure 1 schematically depicts a wireless communications system 100 according to an embodiment. The wireless communications system 100 may e.g. be a cellular communications system, similar to conventional LTE systems, but is not limited thereto. However, according to further embodiments, the system 100 may also comprise a point-to-point communications system.

Presently, the communications system 100 comprises a base station 20, which serves at least one terminal 10.

For scheduling resources of said communications system 100, preferably time and frequency resources, the base station 20 comprises a scheduler device 200, the functionality of which may be integrated into the base station 20 according to some embodiments. However, according to further embodiments, the scheduler device may also be arranged external to the base station 20, cf. item 200'.

According to further embodiments, the functionality of the scheduler device may e.g. be distributed within one or more network side components of the communications system.

During operation, the terminal 10 provides a radio frequency, RF, signal T to the base station 20, which e.g. comprises uplink transmissions of user data and/or control information. Depending on the specific communications technology, the signal T may e.g. be located in a range of about 400 MHz to about 8GHz. Other frequency ranges are also possible.

According to the principle of the embodiments, the terminal 10 is configured to signal to said base station 20 RF capability information rfci which characterizes spectral properties of a signal T provided by said terminal 10 for transmissions to said base station 20, whereby the base station 20 or devices (co-)operating with said base station are enabled to take into account the terminal's RF capabilities which increases operational flexibility and improves integration of new device types.

According to an embodiment, said spectral properties comprise information on a) a required size of at least one guard band adjacent to a spectrum associated with said transmissions T of said terminal 10, and/or on b) a slope of a spectrum associated with said transmissions T of said terminal 10, and/or on c) an amount of out of band radiation of a spectrum associated with said transmissions T of said terminal 10. This information enables a network side device receiving said information such as e.g. a base station 20 or a scheduler device 200, 200' of said wireless communications system 100 to perform an improved scheduling taking into account the guard band requirements of a specific terminal 10.

In some embodiments, the terminal 10 may signal said RF capability information rfci to its serving base station 20, which may e.g. share this RF capability information rfci with one or more scheduler devices 200, 200'. Also, in case of CoMP (Coordinated Multi-Point) transmissions involving transmissions of several neighboring base stations to the terminal 10, the RF capability information rfci may be shared with the further neighboring base stations, and the like. According to a further embodiment, processing in a data cloud with shared information, e.g. related to the RF capability information rfci, is also possible.

Figure 2 schematically depicts a flow-chart of a method of operating a terminal 10 according to an embodiment. In step 300, said terminal 10 signals RF capability information rfci which characterizes spectral properties of a signal T (Fig. 1) provided by said terminal 10 for transmissions to said base station 20 to the base station 20. The signaling may e.g. be performed during an initial access phase such as a random access (RACH) procedure known from 4G communications systems, but may also be performed at any other time.

According to a further embodiment, said RF capability information rfci characterizes a specific one of several predetermined device classes, wherein said device classes are preferably represented by a digital number. In this case, the signaling 300 of the RF capability information rfci may e.g. be included in other uplink signaling transmissions or the like. Note that the RF capability information rfci in Fig. 1 is depicted by a separate arrow rfci for reasons of clarity only. It is well understood that the signaling process 300 as such may be performed using the regular (initial or later) uplink transmissions also indicated by the block arrow T, i.e. the signaling of the RF capability information rfci is also performed within a spectrum associated with the signal T provided by said terminal 10.

After the signaling step 300, the terminal 10 may receive scheduling information from the base station 20, such as scheduling grants indicating time and/or frequency resources which may be used by the terminal 10 for one or more future uplink data transmissions T. This step is not shown for the sake of clarity in Fig. 2. However, after receiving said scheduling information, in step 302, optionally, the terminal 10 may perform such one or more uplink transmissions T to the base station.

Figure 3 schematically depicts a flow-chart of a method of operating a terminal 10 according to a further embodiment. In step 310, said terminal 10 receives information i to be transmitted to said base station 20 (Fig. 1), wherein said information is e.g. in the form of coded information bits.

The terminal 10 in step 310 provides a digital baseband signal dbbs depending on said information i, e.g. by applying one of the already explained multi-carrier modulation techniques of UF-OFDM or FBMC or CP-OFDM.

After that, in step 320, the terminal performs 320 a step of radio frequency, RF, processing directly on said digital baseband signal dbbs, whereby a RF output signal RFO is obtained, which may e.g. be transmitted to the base station 20 by means of an antenna system of the terminal 10. In this respect, the expression "directly" denotes that no additional filtering has to be performed, since the generation of the digital baseband signal dbbs as obtained according to the embodiments already implies filtering inherently, which is sufficient to fulfil spectral mask requirements in many cases.

Preferably, in step 310, said terminal 10 provides multi-carrier modulated signals of the universal filtered multi-carrier, UFMC, type such as e.g. UF-OFDM.

In other words, according to a preferred embodiment, said digital baseband signal dbbs obtained after step 310 of Fig. 3 is directly subjected to said step 320 of RF processing, particularly without applying a step of filtering said digital baseband signal dbbs.

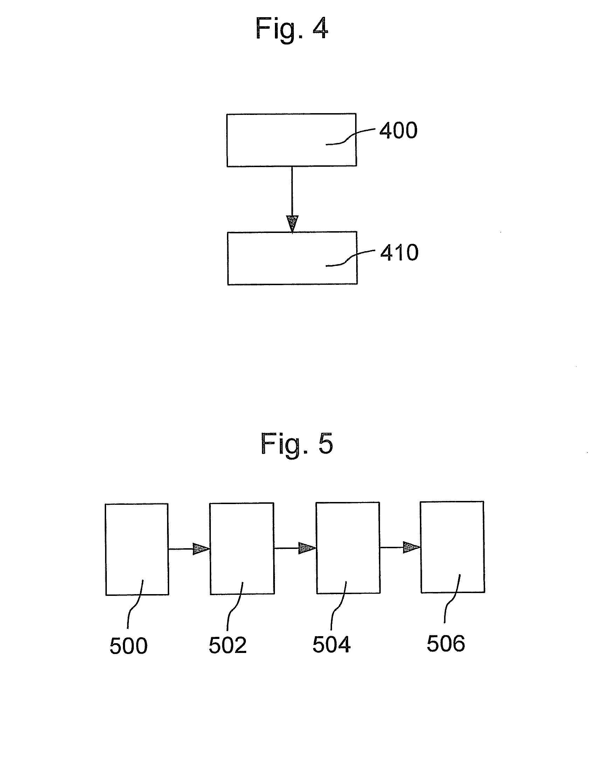

Figure 5 schematically depicts a block diagram illustrating aspects of signal processing in the terminal 10 (Fig. 1) according to an embodiment. In a first block 500, coded information bits are received from a preceding stage (not shown) of a transmitter part of the terminal, such as e.g. a coder stage applying error correction codes and the like e.g. to user data. The coded information bits are forwarded to block 502 which performs a digital baseband signal generation, e.g. of the UF-OFDM type, whereby a multi-carrier modulated baseband signal is obtained. The multi-carrier modulated baseband signal is forwarded to block 504 which performs RF preprocessing, typically including digital filtering. This functionality is particularly required with conventional communications systems, where terminals do not signal any RF capability information as provided by the principle according to the embodiments. When applying the principle according to the embodiments, according to some embodiments, block 504 may also advantageously be omitted.

After block 504 (or 502), the respective output signals are subjected to an RF processing in block 506, which may e.g. comprise a frequency upconversion from a baseband frequency range (in case of a baseband signal) or an intermediate frequency range (in case of an intermediate frequency signal, which may also be obtained at an output of block 502 according to some further embodiments) to a desired target RF range of e.g. between about 400 MHz and about 8 GHz.

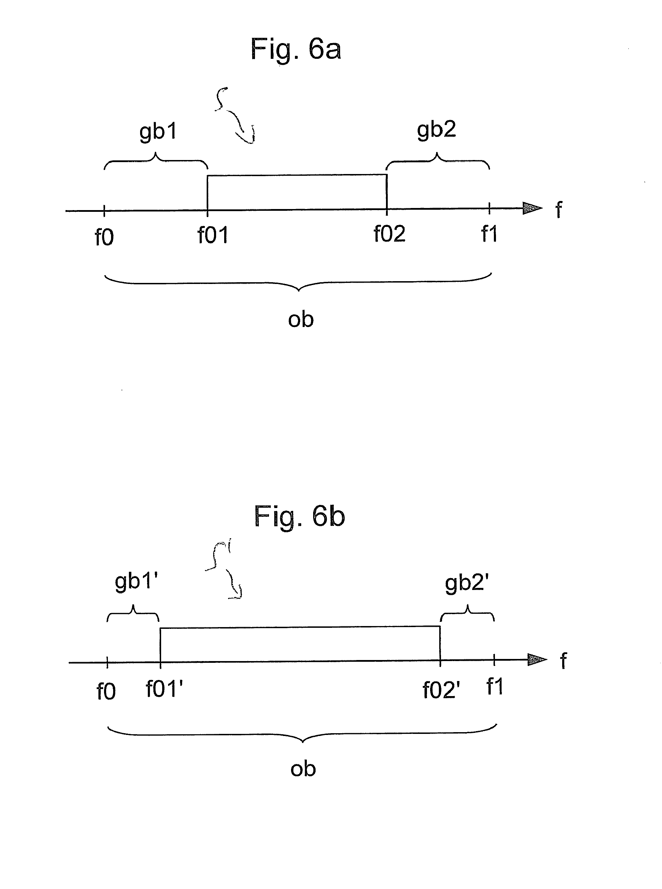

Figure 6a, 6b schematically depict frequency spectra and associated guard bands according to an embodiment.

Fig. 6a depicts a frequency spectrum S of the signal T (Fig. 1) of the terminal 10 used for transmitting information to the base station 20. The overall bandwidth ob of the considered transmission configuration is e.g. 10 MHz, arranged between starting frequency f0 and end frequency f1, e.g. ob = f1-f0. As can be seen from Fig. 6a, the spectrum S of signal T has substantial non-vanishing components in a smaller frequency range (f01;f02) arranged within said overall bandwidth, and a first guard band gb1 is provided between the starting frequency f0 and frequency f01 of the spectrum S, and a second guard band gb2 is provided between the end frequency f1 and frequency f02 of the spectrum S. In many embodiments, the guard bands gb1, gb2 may comprise an identical or at least similar frequency range. However, according to other embodiments, the guard bands gb1, gb2 may also comprise different frequency ranges or widths, respectively. According to the present example, the guard bands gb1, gb2 are comparatively large which accounts for a specific type of terminal 10 e.g. representing a first device class, said first device class being associated with a first guard band requirement which e.g. indicates that devices 10 (Fig. 1) of said first device class require a comparatively large guard band adjacent to their transmitted signal spectrum S.

According to an embodiment, a second device class may be associated with a second guard band requirement which e.g. indicates that devices of said second device class require a comparatively small guard band adjacent to their transmitted signal spectrum. Such spectrum of a second device class is depicted by Fig. 6b. In analogy to Fig. 6a, the signal spectrum S' (ranging from frequency f01' to frequency f02') is depicted within the overall band ob, wherein comparatively small guard bands gb1', gb2' are provided.

In other words, low-cost terminals with less sophisticated hardware such as e.g. RF amplifiers and the like may be assigned the first device class, which is characterized by spectral properties according to Fig. 6a, whereas terminals with more complex signal processing may e.g. be assigned the second device class, which is characterized by spectral properties according to Fig. 6b.

According to the principle of the embodiments, the terminal 10 signals its RF capability information rfci, e.g. in the form of a binary data value, to a base station 20 (Fig. 1), thus indicating how large the guard bands should be chosen or how the frequency resources should be scheduled for the respective terminal 10.

This way, low-cost terminals requiring large guard bands as well as more sophisticated terminals with better transmitter hardware may both be operated / served by the base station 20, thus enabling to include less complex terminals 10 into the communication system while at the same time maintaining or even increasing spectral efficiency due to the fact that for each terminal (only) the actually required amount of guard bands is reserved.

Figure 4 schematically depicts a flow-chart of a method of operating a scheduler device 200, 200' according to an embodiment. In step 400, said scheduler device 200, 200' receives from at least one terminal 10 of said wireless communications system 100 (Fig. 1) radio frequency, RF, capability information rfci which characterizes spectral properties of a signal T provided by said at least one terminal 10 for transmissions to the base station 20.

Presently, the spectral properties comprise information on a required size of at least one guard band gb1, gb2 (Fig. 6a) adjacent to a spectrum S associated with said transmissions T of said terminal 10, but may, according to further embodiments, also comprise b) information on a slope of a spectrum S associated with said transmissions T of said terminal 10, and/or c) information on an amount of out of band radiation of a spectrum S associated with said transmissions of said terminal 10, and/or d) the capability to meet a particular spectral mask requirement. According to an embodiment, when using said capability to meet a particular spectral mask requirement, two or more different spectral masks may be defined, where one is less stringent than the other one.

After step 400, in step 410, said scheduler device 200, 200' schedules resources, particularly time and/or frequency resources, for said terminal 10 depending on said RF capability information rfci. For example, resources for a terminal 10 with spectrum characteristics according to Fig. 6a may be scheduled such that sufficient guard bands are comprised around the scheduled frequency range. Likewise, scheduling 410 for a terminal 10 with spectrum characteristics according to Fig. 6b may be scheduled such that sufficient (smaller) guard bands are comprised around the scheduled frequency range. Thus, resource scheduling may advantageously be fine-tuned accounting for different guard band requirements of different terminals or terminal device classes.

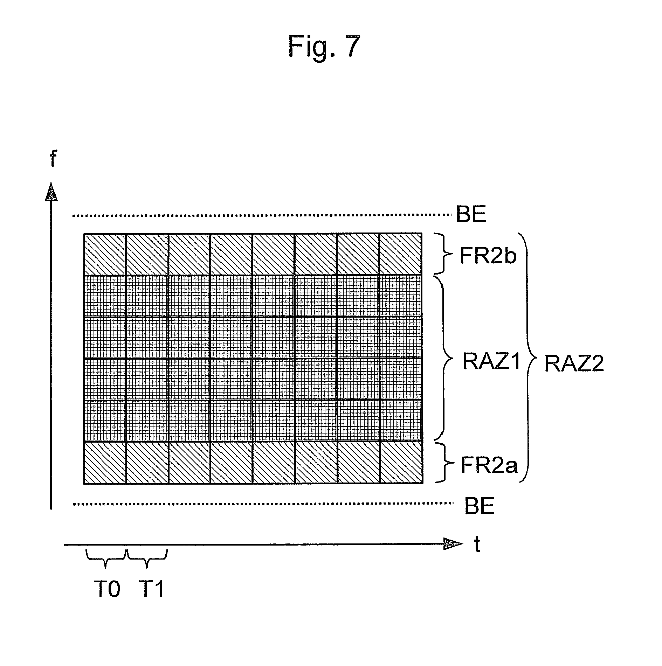

Fig. 7 schematically depicts a time-frequency resource scheme according to an embodiment. The resources are portioned into time slots T0, T1, .. along a horizontal time axis t and frequency subcarriers (not shown in detail) along a vertical frequency axis f. Band edges of the considered communications configuration are symbolized by the dashed horizontal lines BE.

A first frequency range RAZ1 symbolizes a first resource allocation zone wherein resources for class 1 terminals (i.e., terminals having high guard band requirements such as e.g. depicted by Fig. 6a) may be scheduled. Outside said first resource allocation zone RAZ1, further frequency ranges FR2a, FR2b are present which, together with the first resource allocation zone RAZ1, define a second resource allocation zone RAZ2. Class 2 terminals (i.e., terminals having reduced guard band requirements such as e.g. depicted by Fig. 6b) may be scheduled also within the complete second resource allocation zone RAZ2, i.e. closer to the band edges BE, because they have less out of band radiation.

Further aspects of the principle according to the embodiments are explained below.

According to an embodiment, new device classes for transmitter devices such as terminals 10 may be provided. As an example, "device class 1" may denote low-end devices requiring less complex RF (pre-)processing leading to higher emissions outside the modulated subcarriers (out of band radiation) and thus requiring larger guard bands (cf. Fig. 6a), and "device class 2" may denote high-end devices supporting higher processing efforts and more costly RF elements leading to lower impairments. This allows operating with reduced guard band sizes (cf. Fig. 6b).

According to an embodiment, this capability may be signaled by the terminal 10 (Fig. 1) to the base station 20, preferably when it initially attaches to the network 100.

According to a further embodiment, a radio resource management of the communications network 100 may take care for proper resource allocation of the devices of different device classes, see Figure 7. Class 1 devices may e.g. not be allocated in frequencies (e.g. physical resource blocks (PRB) / subbands) close to the band edge, taking into account their larger guard band requirement. For example, class 1 devices are only allocated in the first frequency range RAZ1. Also, class 2 devices may be allocated in all frequencies including resources very close to the band edge BE, as their out-of-band radiation is much less. Hence, class 2 devices may be allocated to the complete second frequency range RAZ2.

According to a further embodiment, for class 1 devices this restricts the operating pass-band to a smaller size than before, namely the first frequency range RAZ1, reducing cost and complexity. For class 2 devices the existing requirements (e.g. as defined by the LTE standard) can be even more stringent, increasing spectral efficiency, because of a larger effective operating pass-band size as symbolized by the second frequency range RAZ2.

According to a further embodiment, a radio frame structure may offer particular band edge resources, namely the frequency ranges FR1b, FR2b, only usable by class 2 devices. According to a further embodiment, the scheduler device 200, 200' allocates those resources, taking into account device class knowledge, which has been obtained from the terminals 10.

Compared to conventional 4G systems the invention thus both increases spectral efficiency and provides low complexity support at the same time. I.e., transmitter devices or terminals 10 with less complex signal processing and RF signal processing hardware may be used, e.g. having a reduced number of filter stages.

According to further embodiments, in order to fulfill spectral mask requirements, CP-OFDM signals typically use a combination of guard bands (≈23% guard band overhead for 1.4 MHz bandwidth LTE) and digital filtering at the RF pre-processing input, e.g. at block 504 of Fig. 5. This digital filtering (e.g. typically using FIR filter orders of around 100) increases the transmitter complexity. The transmitter complexity is an issue for low-end devices. When using a reduced transmitter complexity, larger guard bands may be required, which may advantageously be signaled according to the embodiments, and optionally a resource scheduling may also be performed depending on said signaled guard band requirements.

According to further embodiments, spectral efficiency may be traded against device complexity as follows: In order to reduce guard band overhead, the filter orders of a transmitter chain have to be increased. This may be possible for high-end devices, but not for low-end devices due to cost restrictions. Additionally, RF nonlinearities (e.g. due to the power amplifier) will generate a spectral regrowth at the band edges. This effect again will be stronger in low end devices and does call for even larger guard band sizes, contradicting with the overall desired spectral efficiency target.

According to further embodiments, related to a filter order of RF pre-processing, RF-preprocessing typically uses a digital filter (cf. block 504 of Fig. 5) for achieving the spectral mask requirements. In view of the principle according to the embodiments, a frequency-domain filter-roll-off with fixed digital filter for low end device can start further away from the band edge BE (Fig. 7) than before, because of an effectively reduced operating pass-band size. This reduces the required steepness of the filter slope and thus brings down the filter order for digital RF pre-processing and thus the device complexity.

According to further embodiments, related to using UF-OFDM, it is proposed to use UF-OFDM with no RF-pre-processing filters at all for class 1 devices (i.e., in this case, block 504 of Fig. 5 may be omitted), as the inherent filters of the UF-OFDM waveform are sufficient to fulfill spectral mask requirements with some guard bands (e.g. similar in size as today's LTE system). This completely removes RF pre-processing filtering.

According to a further embodiment, for class 2 devices, additionally RF-pre-processing filters may be applied for further suppression of out of band radiation, so that only a few subcarriers of guard overhead are used.

According to a further embodiment, if a terminal 10 (Fig. 1) has not yet signaled its RF capability information to a network side entity such as the base station 20 and/or the scheduler device 200, 200', which may e.g. occur during an initial access of the terminal 10 to the system 100, usable resources may be located only at the band-inner parts of the overall bandwidth. This may e.g. be taken into account in a frame structure. For example, a terminal 10 may be configured such that - if it has not yet signaled its RF capability information to a network side entity such as the base station 20 and/or the scheduler device 200, 200' - it only uses specific, preferably band-inner, parts of an overall bandwidth ob (Fig. 6a), to ensure that no out of band radiation which said terminal 10 may generate during transmission T affects frequency ranges outside of the overall bandwidth ob.

According to a further embodiment, related to frame structure, transmission resources may be partitioned into different zones, cf. the frequency ranges RAZ1, RAZ2, FR2a, FR2b already explained above with reference to Figure 7.

According to a further embodiment, a band fragmentation into multiple discontinuous sub-bands, e.g. for class 1 devices according to the exemplary embodiments explained above, may lead to a resource allocation in "sub-band-inner" parts of the spectrum.

According to a further embodiment, a numerical example for an underlying UF-OFDM waveform in a 10 MHz band (i.e., overall bandwidth is exemplarily assumed to be 10 MHz) is: According to 3GPP TS 36.101, 3rd Generation Partnership Project; Technical Specification Group Radio Access Network; Evolved Universal Terrestrial Radio Access (E-UTRA); User Equipment (UE) radio transmission and reception, LTE with CP-OFDM in combination with additional filtering for RF-pre-processing can allocate 600 subcarriers with 15 kHz spacing.

According to an embodiment, UF-OFDM in combination with additional filtering can allocate around 660 subcarriers. According to a further embodiment, UF-OFDM without any additional filtering easily fulfills spectral mask requirements, when having allocated 600 subcarriers.

According to a further embodiment, with an exemplary physical resource block (PRB) size of 12 subcarriers, the inner 50 PRBs may form the zone for class 1 and 2 devices, reference numeral RAZ1 of Fig. 7. According to a further embodiment, two additional PRBs (in terms of frequency dimension, corresponding to the frequency ranges FR2a, FR2b of Fig. 7) at each side of the band RAZ1 may form a zone attributed to class 1 devices. Note that this example is for an exemplary 10 MHz LTE setting with assumed 10% guard band overhead. According to a further embodiment, with smaller bandwidths, e.g. due to fragmentation, the relative share of additionally gained band edge zones is increased - 1.4 MHz has 23% overhead.

According to a further embodiment, a frequency position for initial access (e.g., similar to LTE RACH) may be located in the inner zone.

According to a further embodiment, related to Radio Resource Management and Scheduling, a scheduler (e.g., scheduler device 200 of Fig. 1) may take care for the device class information and may allocate class 2 devices only in an inner part of the band.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Terminal (10) for a wireless communications system (100), wherein said terminal (10) is configured to signal (300) to a base station (20) of said communications system (100) radio frequency, RF, capability information (rfci) which characterizes spectral properties of a signal (T) provided by said terminal (10) for transmissions to said base station (20).

2. Terminal (10) according to claim 1, wherein said spectral properties comprise information on a) a required size of at least one guard band (gb1, gb2) adjacent to a spectrum (S) associated with said transmissions of said terminal (10), and/or on b) a slope of a spectrum (S) associated with said transmissions of said terminal (10), and/or on c) an amount of out of band radiation of a spectrum (S) associated with said transmissions of said terminal (10).

3. Terminal (10) according to one of the preceding claims, wherein said RF capability information (rfci) characterizes a specific one of several predetermined device classes, wherein said device classes are preferably represented by a digital number.

4. Terminal (10) according to one of the preceding claims, wherein said terminal (10) is configured to provide (310) a digital baseband signal (dbbs) depending on information (i) to be transmitted to said base station (20), and to perform a step (320) of radio frequency, RF, processing directly on said digital baseband signal (dbbs).

5. Method of operating a terminal (10) for a wireless communications system (100), wherein said terminal signals (300) to a base station (20) of said communications system (100) radio frequency, RF, capability information (rfci) which characterizes spectral properties of a signal (T) provided by said terminal (10) for transmissions to said base station (20).

6. Method according to claim 5, wherein said spectral properties comprise information on a) a required size of at least one guard band (gb1, gb2) adjacent to a spectrum (S) associated with said transmissions of said terminal (10), and/or on b) a slope of a spectrum (S) associated with said transmissions of said terminal (10), and/or on c) an amount of out of band radiation of a spectrum (S) associated with said transmissions of said terminal (10).

7. Method according to one of the claims 5 to 6, wherein said terminal (10) provides (310) a digital baseband signal (dbbs) depending on information (i) to be transmitted to said base station (20), and performs (320) a step of radio frequency, RF, processing directly on said digital baseband signal (dbbs).

8. Method according to claim 7, wherein said digital baseband signal (dbbs) is directly subjected to said step of RF processing, particularly without applying a step of filtering said digital baseband signal (dbbs).

9. Scheduler device (200; 200') for a wireless communications system (100), wherein said scheduler device (200; 200') is configured to receive (400) from at least one terminal (10), particularly a terminal according to one of the claims 1 to 4, of said wireless communications system (100) radio frequency, RF, capability information (rfci) which characterizes spectral properties of a signal provided by said at least one terminal (10) for transmissions to a base station (20) of said communications system (100).

10. Scheduler device (200; 200') according to claim 9, wherein said spectral properties comprise information on a) a required size of at least one guard band (gb1, gb2) adjacent to a spectrum (S) associated with said transmissions of said terminal (10), and/or on b) a slope of a spectrum (S) associated with said transmissions of said terminal (10), and/or on c) an amount of out of band radiation of a spectrum (S) associated with said transmissions of said terminal (10).

11. Scheduler device (200; 200') according to one of the claims 9 to 10, wherein said scheduler device (200; 200') is configured to schedule (410) resources, particularly frequency resources, for said terminal (10) depending on said RF capability information (rfci).

12. Method of operating a scheduler device (200; 200') for a wireless communications system (100), wherein said scheduler device (200; 200') receives (400) from at least one terminal (10), particularly a terminal according to one of the claims 1 to 4, of said wireless communications system (100) radio frequency, RF, capability information (rfci) which characterizes spectral properties of a signal provided by said at least one terminal (10) for transmissions to a base station (20) of said communications system (100).

13. Method according to claim 12, wherein said spectral properties comprise information on a) a required size of at least one guard band (gb1, gb2) adjacent to a spectrum (S) associated with said transmissions of said terminal (10), and/or on b) a slope of a spectrum (S) associated with said transmissions of said terminal (10), and/or on c) an amount of out of band radiation of a spectrum (S) associated with said transmissions of said terminal (10).

14. Method according to one of the claims 12 to 13, wherein said scheduler device (200; 200') schedules ,(410) resources, particularly frequency resources, for said terminal (10) depending on said RF capability information (rfci).
